# EUROPEAN PATENT SPECIFICATION

(11) **EP 2 682 579 B1**
(45) Date of publication and mention of the grant of the patent: **23.05.2018**
(21) Application number: 13172989.9
(22) Date of filing: 20.06.2013
(51) Int. Cl.: F01N 3/20, F01N 3/025, F01N 9/00

(54) **Exhaust emission control system for internal combustion engine, and control method for exhaust emission control system**
Abgasemissionssteuerungssystem für einen Verbrennungsmotor und Steuerungsverfahren für Abgasemissionssteuerungssystem
Système de commande d'émission d'échappement pour moteur à combustion interne et procédé de commande dudit système

(30) Priority: 02.07.2012 JP 2012148723
(43) Date of publication of application: 08.01.2014
(73) Proprietor: TOYOTA JIDOSHA KABUSHIKI KAISHA, Toyota-shi, Aichi-ken, 471-8571 (JP)
(72) Inventor: OTA, Hirohiko, Toyota-shi, Aichi-ken, 471-8571 (JP)
(74) Representative: Kuhnen & Wacker Patent- und Rechtsanwaltsbüro PartG mbB

(56) References cited:
- WO-A1-2011/162684
- WO-A2-2011/079026
- JP-A- 2011 241 738
- JP-A- 2011 247 135
- US-A1- 2010 122 521

## Description

### BACKGROUND OF THE INVENTION

### Field of the Invention

The invention relates to an exhaust emission control system for an internal combustion engine, and a control method for the exhaust emission control system.

### Description of Related Art

For example, as is described in Japanese Patent Application Publication No. 2008-274952 (JP 2008-274952 A), there is known an exhaust emission control system for an internal combustion engine, which includes a NOx purification catalyst and a reducing agent supply mechanism. The NOx purification catalyst purifies nitrogen oxides (NOx) in exhaust gas. The reducing agent supply mechanism supplies reducing agent to an exhaust passage. The reducing agent is utilized to purify NOx at the NOx purification catalyst. In the reducing agent supply mechanism, urea aqueous solution is injected from the addition valve to the exhaust passage. The injected urea aqueous solution is heated by the heat of exhaust gas. Thus, the urea aqueous solution changes into ammonia by the hydrolysis of urea. The ammonia is adsorbed by the NOx purification catalyst. Thus, NOx flowing into the NOx purification catalyst is reduced and purified.

Incidentally, for example, when the temperature of exhaust gas is low, urea in the urea aqueous solution injected from the addition valve forms a deposit, such as a crystal and a mixture, originating from urea without being hydrolyzed into ammonia, and is deposited in the NOx purification catalyst, or the like. Therefore, the NOx purification efficiency of the NOx purification catalyst decreases. In the exhaust emission control system described in JP 2008-274952 A, when it is determined that a deposit amount in the NOx purification catalyst has reached a threshold, temperature raising control for raising the temperature of exhaust gas is executed. Thus, the deposit deposited in the NOx purification catalyst is vaporized and removed.

Incidentally, temperature raising control for raising the temperature of exhaust gas includes not only control for removing a deposit that originates from urea in JP 2008-274952 A but also, for example, control for regenerating a filter that traps particulate matter (PM) in exhaust gas. In addition, during high-load operation of an internal combustion engine, the temperature of exhaust gas rises. In this way, during engine operation in which the temperature of exhaust gas becomes high, the addition valve of the exhaust emission control system is exposed to high-temperature exhaust gas. Therefore, when urea aqueous solution is present in the addition valve during engine operation in which the temperature of exhaust gas is high, urea aqueous solution boils in the addition valve. Thus, the metal material of the addition valve may corrode.

JP 2011-247135 A discloses an exhaust emission control system for an internal combustion engine including a dosing valve. The dosing valve is closed when the exhaust gas temperature is lower than the temperature at which the SCR catalyst becomes active. A fixation prevention system opens the dozing valve when the exhaust gas temperature is equal to or higher than the temperature at which the urea solution crystallizes.

### SUMMARY OF THE INVENTION

The invention provides an exhaust emission control system for an internal combustion engine, which is able to suppress metallic corrosion of an addition valve due to boiling of reducing agent in the addition valve, and a control method for the exhaust emission control system.

A first aspect of the invention provides an exhaust emission control system for an internal combustion engine. The exhaust emission control system includes: an addition valve that supplies reducing agent to an exhaust passage and a supply tube that supplies the reducing agent to the addition valve, wherein, when a temperature of exhaust gas flowing through the exhaust passage is higher than or equal to a reference temperature, recovery control for recovering the reducing agent in the supply tube is executed.

With the above configuration, when the temperature of exhaust gas is higher than or equal to the reference temperature and the reducing agent easily boils in the addition valve, the reducing agent in the supply tube is recovered. Therefore, it is possible to recover the reducing agent in the addition valve through the supply tube. Thus, it is possible to suppress boiling of the reducing agent in the addition valve. Thus, it is possible to suppress metallic corrosion of the addition valve due to boiling of the reducing agent in the addition valve.

In the exhaust emission control system according to the first aspect of the invention, the recovery control may be executed when the temperature of exhaust gas, which is acquired through any one of actual measurement and estimation, is higher than or equal to the reference temperature.

With the above configuration, the actually detected temperature of exhaust gas or the temperature of exhaust gas estimated from the engine operating state, or the like, is compared with the reference temperature, so it is possible to determine whether the temperature of exhaust gas is higher than or equal to the reference temperature. Then, it is possible to execute recovery control when the temperature of exhaust gas is higher than or equal to the reference temperature.

In the exhaust emission control system according to the first aspect of the invention, the recovery control may be executed in an engine operating state where the temperature of exhaust gas is higher than or equal to the reference temperature.

The temperature of exhaust gas varies on the basis of the engine operating state. Therefore, whether the temperature of exhaust gas rises to the reference temperature or above may be determined not on the basis of the temperature of exhaust gas itself but on the basis of the engine operating state. Then, in the above configuration, the recovery control is configured to be executed in the engine operating state where it is estimated that the temperature of exhaust gas is higher than or equal to the reference temperature. With this configuration as well, it is possible to execute the recovery control when the temperature of exhaust gas is higher than or equal to the reference temperature.

In the exhaust emission control system according to the first embodiment of the invention, a filter that traps particulate matter in exhaust gas may be provided in the exhaust passage, regeneration process for regenerating the filter may be executed by raising the temperature of exhaust gas when an amount of the particulate matter trapped by the filter becomes larger than or equal to a threshold, and the recovery control may be executed when the amount of the particulate matter trapped by the filter is larger than or equal to a reference amount that is smaller than the threshold.

With the above configuration, when the particulate matter trapped by the filter is larger than or equal to the reference amount, urea aqueous solution recovery control is executed, so the urea aqueous solution recovery control is executed in advance of a situation that the amount of particulate matter trapped by the filter becomes larger than or equal to the threshold and then temperature raising control for regenerating the filter is executed. Thus, it is possible to start the recovery control in advance of the situation that the temperature of exhaust gas is higher than or equal to the reference temperature.

In the exhaust emission control system according to the first aspect of the invention, the recovery control may be executed when it is predicted that an engine operating state changes into a state where the temperature of exhaust gas is higher than or equal to the reference temperature.

As described above, the temperature of exhaust gas varies on the basis of the engine operating state. Then, it is possible to predict to some extent whether the engine operating state changes into the state where the temperature of exhaust gas rises to the reference temperature or above. Then, in the above configuration, when it is predicted that the engine operating state changes into the state where the temperature of exhaust gas is higher than or equal to the reference temperature, the recovery control is executed in advance of the change. With the above configuration, it is possible to start the recovery control in advance of the situation that the temperature of exhaust gas is higher than or equal to the reference temperature.

In the exhaust emission control system according to the first aspect, the engine operating state where the temperature of exhaust gas is higher than or equal to the reference temperature may be established when temperature raising control for raising the temperature of exhaust gas is executed.

In the exhaust emission control system according to the first aspect, the engine operating state where the temperature of exhaust gas is higher than or equal to the reference temperature may be established when the internal combustion engine is operating at high load.

The temperature raising control may be, for example, control for raising the temperature of exhaust gas in order to eliminate soot, deposit, or the like, deposited in an exhaust system.

In the exhaust emission control system according to the first aspect of the invention, when the temperature of exhaust gas is higher than or equal to a predetermined temperature that is higher than the reference temperature while the recovery control is being executed, the recovery control is stopped, and the reducing agent is injected from the addition valve.

In the above configuration, when the temperature of exhaust gas is higher than the predetermined temperature that is higher than the reference temperature and the addition valve may undergo heat damage during recovery control, the reducing agent is injected from the addition valve. When the reducing agent is injected, relatively low-temperature reducing agent is supplied from, for example, a tank, or the like, to the addition valve, so the addition valve is cooled. Thus, it is possible to suppress heat damage to the addition valve.

A second aspect of the invention provides a control method for an exhaust emission control system for an internal combustion engine. The exhaust emission control system includes: an addition valve that supplies reducing agent to an exhaust passage and a supply tube that supplies the reducing agent to the addition valve. The control method includes: when a temperature of exhaust gas flowing through the exhaust passage is higher than or equal to a reference temperature, executing recovery control for recovering the reducing agent in the supply tube.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
- FIG. 1: is a schematic view that shows an internal combustion engine and its surrounding configuration to which an exhaust emission control system for an internal combustion engine according to an embodiment of the invention is applied;
- FIG. 2: is a flowchart that shows the procedure of executing urea aqueous solution recovery and addition control according to the embodiment;
- FIG. 3: is a flowchart that shows the procedure of executing urea aqueous solution recovery and addition control in the exhaust emission control system for an internal combustion engine according to the embodiment of the invention;
- FIG. 4: is a flowchart that shows the procedure of executing urea aqueous solution recovery and addition control in the exhaust emission control system for an internal combustion engine according to the embodiment of the invention;
- FIG. 5: is a flowchart that shows the procedure of executing urea aqueous solution recovery and addition control in the exhaust emission control system for an internal combustion engine according to the embodiment of the invention;
- FIG. 6: is a flowchart that shows the procedure of executing urea aqueous solution recovery and addition control in the exhaust emission control system for an internal combustion engine according to the embodiment of the invention; and
- FIG. 7: is a flowchart that shows the procedure of executing urea aqueous solution recovery and addition control in the exhaust emission control system for an internal combustion engine according to the embodiment of the invention.

### DETAILED DESCRIPTION OF EMBODIMENTS

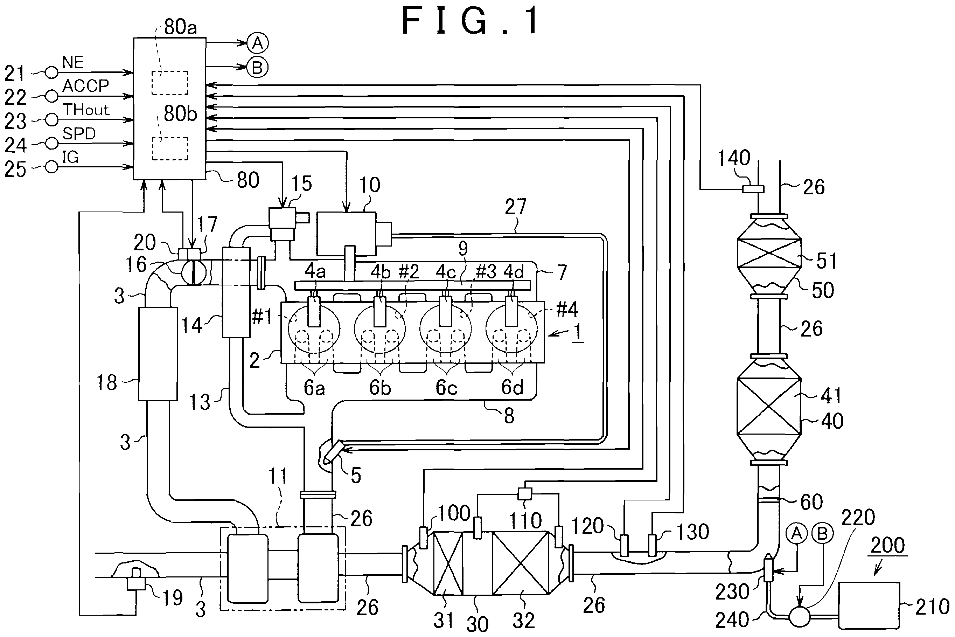

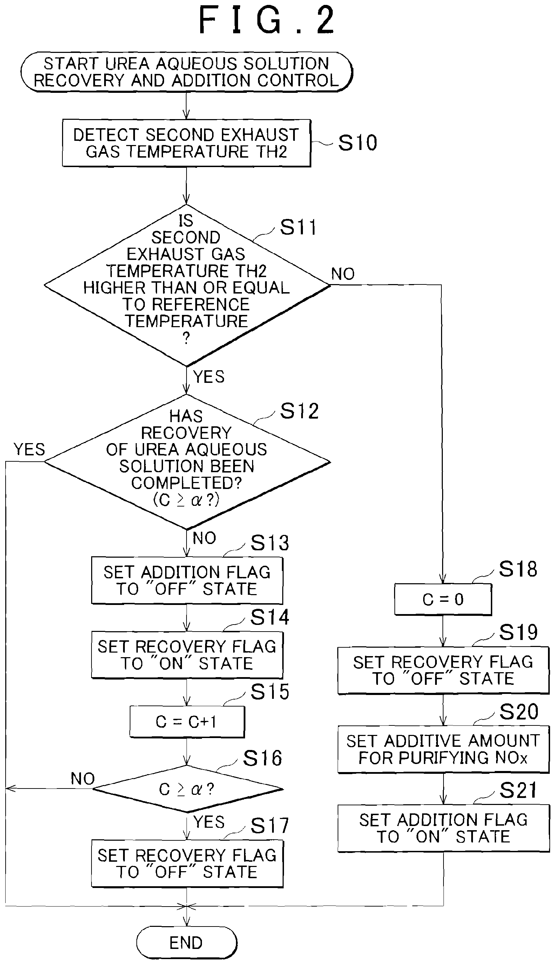

Hereinafter, one example embodiment of the exhaust emission control system for an internal combustion engine according to the invention will be described with reference to FIG. 1 and FIG. 2. FIG. 1 shows an internal combustion engine to which the exhaust emission control system according to the present embodiment is applied and its surrounding mechanism. As shown in FIG. 1, the internal combustion engine 1 according to the present embodiment is a diesel engine.

As shown in FIG. 1, the internal combustion engine 1 includes a plurality of cylinders #1 to #4. A plurality of fuel injection valves 4a to 4d are provided at a cylinder head 2. These fuel injection valves 4a to 4d inject fuel into combustion chambers of the respective cylinders #1 to #4. The cylinder head 2 has intake ports and exhaust ports 6a to 6d in correspondence with the respective cylinders #1 to #4. The intake ports are respectively used to introduce fresh air into the cylinders #1 to #4. The exhaust ports 6a to 6d are used to emit combustion gas to the outside of the cylinders.

The fuel injection valves 4a to 4d are connected to a common rail 9 that accumulates high-pressure fuel. The common rail 9 is connected to a supply pump 10. The supply pump 10 draws fuel in a fuel tank, and supplies high-pressure fuel to the common rail 9. High-pressure fuel supplied to the common rail 9 is injected from each of the fuel injection valves 4a to 4d into the corresponding cylinder at the time when each of the fuel injection valves 4a to 4d opens.

An intake manifold 7 is connected to the intake ports. The intake manifold 7 is connected to an intake passage 3. An intake air throttle valve 16 is provided in the intake passage 3. The intake air throttle valve 16 is used to adjust an intake air flow rate.

An exhaust manifold 8 is connected to the exhaust ports 6a to 6d. The exhaust manifold 8 is connected to the exhaust passage 26. A turbocharger 11 is provided in the exhaust passage 26. The turbocharger 11 supercharges intake air that is introduced into the cylinders by utilizing exhaust pressure. An intercooler 18 is provided in the intake passage 3 between an intake-side compressor of the turbocharger 11 and the intake air throttle valve 16. The intercooler 18 cools intake air of which the temperature is raised through supercharging of the turbocharger 11.

A first purification member 30 that purifies exhaust gas is provided downstream of an exhaust-side turbine of the turbocharger 11 in the exhaust gas flow direction in the exhaust passage 26. An oxidation catalyst 31 and a filter 32 are arranged inside the first purification member 30 in series in a direction in which exhaust gas flows.

A catalyst is supported on the oxidation catalyst 31. The catalyst oxidizes hydrocarbons (HC) in exhaust gas. The filter 32 is a member that traps particulate matter (PM) in exhaust gas. The filter 32 is formed of porous ceramics. A catalyst is supported on the filter 32. The catalyst is used to facilitate oxidation of PM. PM in exhaust gas is trapped at the time when exhaust gas passes through the porous wall of the filter 32.

A fuel addition valve 5 is provided near a collecting portion of the exhaust manifold 8. The fuel addition valve 5 is used to supply fuel to the oxidation catalyst 31 or the filter 32 as an additive. The fuel addition valve 5 is connected to the supply pump 10 via a fuel supply tube 27. The arrangement location of the fuel addition valve 5 may be changed as needed as long as the location is in an exhaust system upstream of the first purification member 30.

A second purification member 40 that purifies exhaust gas is provided downstream of the first purification member 30 in the exhaust gas flow direction in the exhaust passage 26. A selective reduction NOx catalyst (hereinafter, referred to as SCR catalyst) 41 is arranged inside the second purification member 40. The SCR catalyst 41 reduces and purifies NOx in exhaust gas by utilizing reducing agent.

Furthermore, a third purification member 50 that purifies exhaust gas is provided downstream of the second purification member 40 in the exhaust gas flow direction in the exhaust passage 26. An ammonia oxidation catalyst 51 is arranged inside the third purification member 50. The ammonia oxidation catalyst 51 purifies ammonia in exhaust gas.

The internal combustion engine 1 includes an urea aqueous solution supply mechanism 200. The urea aqueous solution supply mechanism 200 supplies urea aqueous solution, which serves as reducing agent, to the SCR catalyst 41. The urea aqueous solution supply mechanism 200 includes a tank 210, an urea aqueous solution addition valve 230, an urea aqueous solution supply tube 240 and a pump 220. The tank 210 stores urea aqueous solution. The urea aqueous solution addition valve 230 injects and supplies urea aqueous solution into the exhaust passage 26. The urea aqueous solution supply tube 240 connects the urea aqueous solution addition valve 230 to the tank 210. The urea aqueous solution supply tube 240 is made of a metal. The pump 220 is provided in the urea aqueous solution supply tube 240.

The urea aqueous solution addition valve 230 is made of a metal. A component, such as a coil, for opening the injection hole of the addition valve 230 is accommodated inside the urea aqueous solution addition valve 230. The urea aqueous solution addition valve 230 is provided in the exhaust passage 26 between the first purification member 30 and the second purification member 40. The injection hole of the urea aqueous solution addition valve 230 is directed toward the SCR catalyst 41. When the urea aqueous solution addition valve 230 is opened through energization of the coil, urea aqueous solution is injected and supplied into the exhaust passage 26 via the urea aqueous solution addition valve 230.

The pump 220 is an electric pump. When the pump 220 rotates in the forward direction, the pump 220 feeds urea aqueous solution from the tank 210 to the urea aqueous solution addition valve 230. In contrast, when the pump 220 rotates in the reverse direction, the pump 220 feeds urea aqueous solution from the urea aqueous solution addition valve 230 to the tank 210. That is, when the pump 220 rotates in the reverse direction, urea aqueous solution is recovered from the urea aqueous solution addition valve 230 and the urea aqueous solution supply tube 240, and is returned to the tank 210.

A dispersion plate 60 is provided in the exhaust passage 26 between the urea aqueous solution addition valve 230 and the SCR catalyst 41. The dispersion plate 60 facilitates atomization of urea aqueous solution by dispersing the urea aqueous solution injected from the urea aqueous solution addition valve 230.

Urea aqueous solution injected from the urea aqueous solution addition valve 230 changes into ammonia by the hydrolysis of urea due to the heat of exhaust gas. Then, the ammonia is supplied to the SCR catalyst 41 as the reducing agent for NOx. Ammonia supplied to the SCR catalyst 41 is adsorbed by the SCR catalyst 41, and is utilized to reduce NOx. Part of hydrolyzed ammonia is directly utilized to reduce NOx before being adsorbed by the SCR catalyst 41.

Other than the above, the internal combustion engine 1 includes an exhaust gas recirculation device (hereinafter, referred to as EGR device). The EGR device is a device that decreases a combustion temperature in the cylinders by introducing part of exhaust gas into intake air and, as a result, reduces the amount of NOx generated. The EGR device is formed of an EGR passage 13, an EGR valve 15, an EGR cooler 14, and the like. The EGR passage 13 provides fluid communication between the intake passage 3 and the exhaust manifold 8. The EGR valve 15 is provided in the EGR passage 13. An exhaust gas recirculation amount that is introduced from the exhaust passage 26 to the intake passage 3 is regulated by adjusting the opening degree of the EGR valve 15. That is, an EGR amount is regulated by adjusting the opening degree of the EGR valve 15. The temperature of exhaust gas flowing through the EGR passage 13 is decreased by the EGR cooler 14.

Various sensors for detecting an engine operating state are attached to the internal combustion engine 1. For example, an air flow meter 19 detects an intake air flow rate GA in the intake passage 3. A throttle valve opening degree sensor 20 detects the opening degree of the intake air throttle valve 16. An engine rotation speed sensor 21 detects the rotation speed of a crankshaft. That is, the engine rotation speed sensor 21 detects an engine rotation speed NE. An accelerator sensor 22 detects the depression amount of an accelerator pedal. That is, the accelerator sensor 22 detects an accelerator operation amount ACCP. An outside air temperature sensor 23 detects an outside air temperature THout. A vehicle speed sensor 24 detects a vehicle speed SPD of a vehicle on which the internal combustion engine 1 is mounted. An ignition switch 25 detects start operation and stop operation of the internal combustion engine 1, conducted by a driver of the vehicle.

A first exhaust gas temperature sensor 100 detects a first exhaust gas temperature TH1. The first exhaust gas temperature sensor 100 is provided upstream of the oxidation catalyst 31 in the exhaust gas flow direction. The first exhaust gas temperature TH1 is the temperature of exhaust gas before the exhaust gas flows into the oxidation catalyst 31. A differential pressure sensor 110 detects a pressure difference ΔP in exhaust gas pressure. The pressure difference ΔP is a pressure difference between an exhaust gas pressure upstream of the filter 32 in the exhaust gas flow direction and an exhaust gas pressure downstream of the filter 32 in the exhaust gas flow direction.

A second exhaust gas temperature sensor 120 and a first NOx sensor 130 are provided upstream of the urea aqueous solution addition valve 230 in the exhaust gas flow direction in the exhaust passage 26 between the first purification member 30 and the second purification member 40. The second exhaust gas temperature sensor 120 detects a second exhaust gas temperature TH2. The second exhaust gas temperature TH2 is the temperature of exhaust gas before the exhaust gas flows into the SCR catalyst 41. The first NOx sensor 130 detects a first NOx concentration N1. The first NOx concentration N1 is a NOx concentration in exhaust gas before the exhaust gas flows into the SCR catalyst 41.

A second NOx sensor 140 is provided in the exhaust passage 26 downstream of the third purification member 50 in the exhaust gas flow direction. The second NOx sensor 140 detects a second NOx concentration N2. The second NOx concentration N2 is the NOx concentration of exhaust gas purified by the SCR catalyst 41.

Outputs of these various sensors, and the like, are input to a control device 80. The control device 80 is mainly formed of a microcomputer that includes a central processing unit (CPU) 80a, a read only memory (ROM), a random access memory (RAM), a counter 80b, an input interface, an output interface, and the like. The read only memory prestores various programs, maps, and the like. The random access memory temporarily stores computation results of the CPU, and the like. Electric power is supplied from a battery to each of the CPU 80a, the counter 80b and the above-described various sensors.

Various controls over the internal combustion engine 1 are executed by the control device 80. The various controls, for example, include fuel injection amount control/fuel injection timing control over the fuel injection valves 4a to 4d and the fuel addition valve 5, discharge pressure control over the supply pump 10, drive amount control over an actuator 17, opening degree control over the EGR valve 15, and the like. The actuator 17 opens or closes the intake air throttle valve 16.

Furthermore, the control device 80 estimates the amount of PM trapped by the filter 32 on the basis of the pressure difference ΔP that is detected by the differential pressure sensor 110. Then, the control device 80 executes filter regeneration process for regenerating the filter 32 when it is determined that the estimated trapped amount of PM exceeds a preset threshold. In this filter regeneration process, fuel is injected from the fuel addition valve 5 into the exhaust manifold 8. Fuel injected from the fuel addition valve 5 is burned as it reaches the oxidation catalyst 31. Thus, the exhaust gas temperature is raised. Exhaust gas raised in temperature by the oxidation catalyst 31 flows into the filter 32, so the temperature of the filter 32 is raised. Thus, PM deposited in the filter 32 is oxidized, and the filter 32 is regenerated.

The control device 80 executes control for adding urea aqueous solution with the use of the urea aqueous solution addition valve 230 as one of the exhaust gas purification controls. In the addition control, an urea additive amount just enough to reduce NOx that is emitted from the internal combustion engine 1 is calculated on the basis of the engine operating state, and the like. In the addition control, the valve opening state of the urea aqueous solution addition valve 230 is controlled such that the urea aqueous solution of the calculated urea additive amount is injected from the urea aqueous solution addition valve 230 to the exhaust passage 26. Thus, NOx in exhaust gas is reduced and purified. Urea aqueous solution addition control is executed on the condition that an addition flag that indicates permission or prohibition of addition of urea aqueous solution is set to an "ON" state that indicates permission of addition of urea aqueous solution during operation of the internal combustion engine 1.

Here, as described above, urea aqueous solution injected from the urea aqueous solution addition valve 230 changes into ammonia by the hydrolysis of urea, and reduces and purifies NOx in exhaust gas. However, for example, when the temperature of exhaust gas is low, part of urea in the injected urea aqueous solution may become a crystal, a mixture, or the like, that originates from urea without being hydrolyzed into ammonia, and may be deposited near the injection hole of the urea aqueous solution addition valve 230, the dispersion plate 60 or the SCR catalyst 41 to form a deposit. Such a deposit is removed through not only the above-described filter regeneration process but also being burned during operation in which the temperature of exhaust gas is high, such as during high-load operation of the internal combustion engine 1.

Incidentally, during operation in which the temperature of exhaust gas is high in this way, urea aqueous solution in the urea aqueous solution addition valve 230 may boil because the urea aqueous solution addition valve 230 is exposed to high-temperature exhaust gas. In this way, when urea aqueous solution boils in the urea aqueous solution addition valve 230, the metal material of the urea aqueous solution addition valve 230 may corrode. Then, in the present embodiment, when the temperature of exhaust gas is higher than or equal to a reference temperature, recovery control is executed to recover urea aqueous solution in the urea aqueous solution addition valve 230 through the urea aqueous solution supply tube 240 by rotating the pump 220 in the reverse direction. This suppresses boiling of urea aqueous solution in the urea aqueous solution addition valve 230. Recovery control in the present embodiment includes control for recovering urea aqueous solution from the urea aqueous solution supply tube 240 by rotating the pump 220 in the reverse direction as described above and control for keeping the state after recovering urea aqueous solution from the urea aqueous solution supply tube 240.

Hereinafter, recovery control for recovering urea aqueous solution from the urea aqueous solution supply tube 240 will be described with reference to FIG. 2. The control device 80 executes urea aqueous solution recovery and addition control in accordance with the procedure of processes shown in the flowchart of FIG. 2. A series of processes shown in FIG. 2 are executed as interrupt process at predetermined intervals during engine operation.

As shown in FIG. 2, when urea aqueous solution recovery and addition control is started, the second exhaust gas temperature TH2 is detected in step S10. The second exhaust gas temperature TH2 is the temperature of exhaust gas immediately before the exhaust gas flows into the SCR catalyst 41. The control device 80 detects the second exhaust gas temperature TH2 on the basis of a signal that is input from the second exhaust gas temperature sensor 120.

Subsequently, the process proceeds to step S11. In step S11, it is determined whether the second exhaust gas temperature TH2 is higher than or equal to the reference temperature. Here, the reference temperature is set to a temperature, at which it is allowed to estimate that urea aqueous solution does not boil in the urea aqueous solution addition valve 230 on the basis of the fact that the second exhaust gas temperature TH2 is lower than the reference temperature. When it is determined in step S11 that the second exhaust gas temperature TH2 is higher than or equal to the reference temperature (YES in step S11), urea aqueous solution may boil when urea aqueous solution remains in the urea aqueous solution addition valve 230. Therefore, the process proceeds to step S12.

In step S12, it is determined whether recovery of urea aqueous solution has been completed. That is, it is determined whether recovery of urea aqueous solution has been already completed after the second exhaust gas temperature TH2 becomes higher than or equal to the reference temperature. This determination may be made by determining whether a count value C of the counter 80b is larger than or equal to a counter determination value α. The count value C indicates a period during which recovery of urea aqueous solution is carried out. In addition, the counter determination value α is set to an integer larger than or equal to "1". The counter determination value α is set to a value at which it is allowed to estimate that urea aqueous solution in an amount corresponding to urea aqueous solution in the urea aqueous solution addition valve 230 has been recovered through the urea aqueous solution supply tube 240 on the basis of the fact that the count value C is larger than or equal to the counter determination value α. When it is determined in step S12 that recovery of urea aqueous solution has not been completed on the basis of the fact that the count value C is smaller than the counter determination value α (NO in step S12), the process proceeds to step S13. On the other hand, when it is determined in step S12 that recovery of urea aqueous solution has been completed (YES in step S12), the control device 80 once ends the process. This keeps a state where urea aqueous solution has been recovered from the urea aqueous solution addition valve 230.

In step S13, an addition flag is set to an "OFF" state. For example, when the second exhaust gas temperature TH2 is higher than or equal to the reference temperature in the last process, the addition flag has been already set to the "OFF" state, so, in this case, the addition flag is kept in the "OFF" state. Thus, the control device 80 stops urea aqueous solution addition control. That is, addition of urea aqueous solution from the urea aqueous solution addition valve 230 is stopped, and urea aqueous solution addition control is stopped. Urea aqueous solution addition control is to purify NOx in exhaust gas as described above.

Subsequently, the process proceeds to step S14. In step S14, a recovery flag is set to an "ON" state. The recovery flag is for the control device 80 to execute recovery of urea aqueous solution on the basis of the recovery flag set to the "ON" state. The control device 80 executes recovery of urea aqueous solution on the basis of the recovery flag set to the "ON" state. Specifically, the control device 80 recovers urea aqueous solution from the urea aqueous solution addition valve 230 and the urea aqueous solution supply tube 240 and returns the urea solution to the tank 210 by rotating the pump 220 in the reverse direction. The recovery of urea aqueous solution is carried out continuously during a period in which the recovery flag is set to the "ON" state. For example, when the second exhaust gas temperature TH2 is larger than or equal to the reference temperature in the last process as well, the recovery flag has been already set to the "ON" state, so, in such a case, the recovery flag is kept in the "ON" state.

Subsequently, the process proceeds to step S15. In step S15, in order to measure a recovery period of urea aqueous solution, the count value C of the counter 80b is calculated. Specifically, the current count value C is calculated by adding "1" to the last count value C.

Subsequently, the process proceeds to step S16. In step S16, it is determined whether the count value C is larger than or equal to the counter determination value α. When it is determined in step S16 that the count value C is smaller than the counter determination value α (NO in step S16), it is estimated that urea aqueous solution still remains in the urea aqueous solution addition valve 230 and urea aqueous solution may boil in the urea aqueous solution addition valve 230. Therefore, the control device 80 once ends the process. That is, the process ends while the recovery flag is kept in the "ON" state.

On the other hand, when it is determined in step S16 that the count value C is larger than or equal to the counter determination value α (YES in step S16), the process proceeds to step S17. In step S17, the recovery flag is set to the "OFF" state, and the control device 80 once ends the process. That is, when affirmative determination is made in step S16, urea aqueous solution in the urea aqueous solution addition valve 230 is recovered, so it is possible to suppress boiling of urea aqueous solution in the urea aqueous solution addition valve 230. Therefore, recovery of urea aqueous solution is stopped by stopping the pump 220. In this way, recovery of urea aqueous solution is stopped when urea aqueous solution in the urea aqueous solution addition valve 230 has been recovered, so it is possible to keep urea aqueous solution remaining in the urea aqueous solution supply tube 240. Therefore, at the time of the next addition control, it is possible to promptly start urea aqueous solution addition control by promptly supplying urea aqueous solution to the urea aqueous solution addition valve 230.

When it is determined in step S11 in the process shown in FIG. 2 that the second exhaust gas temperature TH2 is not higher than or equal to the reference temperature (NO in step S11), the process proceeds to step S18. In step S18, the count value C of the counter 80b is reset to "0". When the count value C is already "0", the value is kept. In step S19, the recovery flag is set to the "OFF" state. In step S19, when the recovery flag is already set to the "OFF" state, the recovery flag is kept in the "OFF" state. That is, through the processes of step S18 and step S19, even when the second exhaust gas temperature TH2 is higher than or equal to the reference temperature in the last process, but when the second exhaust gas temperature TH2 becomes lower than the reference temperature, measurement of a recovery period is stopped and reset, and urea aqueous solution recovery control is stopped.

Subsequently, the process proceeds to step S20, and an additive amount for purifying NOx is set. That is, as described above, an urea additive amount just enough to reduce NOx that is emitted from the internal combustion engine 1 is calculated on the basis of the engine operating state, and the like. In step S21, the addition flag is set to the "ON" state. In step S21, when the addition flag has been already set to the "ON" state, the addition flag is kept in the "ON" state as it is. In this way, when the second exhaust gas temperature TH2 is lower than the reference temperature, the addition flag is set to the "ON" state, so addition of urea aqueous solution from the urea aqueous solution addition valve 230 is carried out. Then, the control device 80 once ends the process.

Next, the operation of the exhaust emission control system according to the present embodiment will be described. The exhaust emission control system according to the present embodiment includes the urea aqueous solution addition valve 230 that supplies urea aqueous solution to the exhaust passage 26. When the temperature of exhaust gas flowing through the exhaust passage 26 is higher than or equal to the reference temperature, the exhaust emission control system executes recovery control for recovering urea aqueous solution in the urea aqueous solution addition valve 230. Thus, when urea aqueous solution easily boils in the urea aqueous solution addition valve 230, urea aqueous solution in the urea aqueous solution addition valve 230 is recovered. Therefore, it is possible to suppress boiling of urea aqueous solution in the urea aqueous solution addition valve 230.

According to the above-described present embodiment, the operation and advantageous effect at the following (1) are obtained.
(1) The exhaust emission control system for the internal combustion engine 1 according to the present embodiment includes the urea aqueous solution addition valve 230 that supplies urea aqueous solution to the exhaust passage 26 and the urea aqueous solution supply tube 240 that supplies urea aqueous solution to the addition valve 230. When the temperature of exhaust gas flowing through the exhaust passage 26 is higher than or equal to the reference temperature, the exhaust emission control system executes recovery control for recovering urea aqueous solution in the urea aqueous solution supply tube 240. Thus, when urea aqueous solution easily boils in the urea aqueous solution addition valve 230, urea aqueous solution in the urea aqueous solution addition valve 230 is recovered through the urea aqueous solution supply tube 240. Therefore, it is possible to suppress boiling of urea aqueous solution in the urea aqueous solution addition valve 230. Thus, it is possible to suppress metallic corrosion of the urea aqueous solution addition valve 230 due to boiling of urea aqueous solution in the urea aqueous solution addition valve 230.

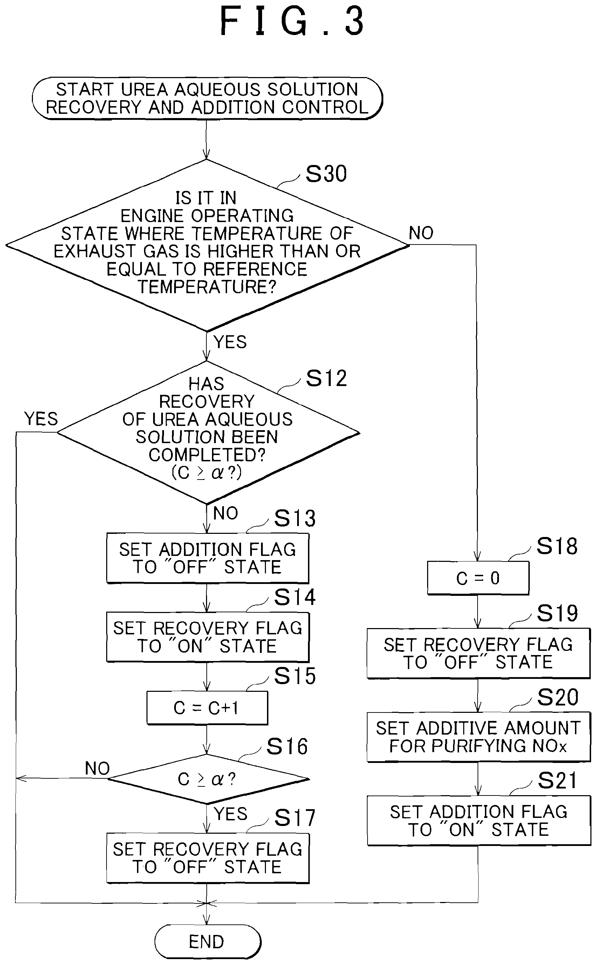

Next, one embodiment of the invention will be described with reference to FIG. 3. In the present embodiment, the difference from the above-described embodiment will be mainly described. The other components and operation are the same as those of the above-described embodiment unless otherwise specified. In addition, like reference numerals denote the same components as those of the above-described embodiment.

In the present embodiment, when the estimated temperature of exhaust gas is higher than or equal to the reference temperature, urea aqueous solution recovery control is executed. That is, when the engine operating state is a state where it is estimated that the temperature of exhaust gas is higher than or equal to the reference temperature, the control device 80 estimates that the temperature of exhaust gas is higher than or equal to the reference temperature and executes urea aqueous solution recovery control.

Specifically, in the present embodiment, the control device 80 executes urea aqueous solution recovery and addition control in accordance with the procedure of processes shown in the flowchart of FIG. 3. A series of processes shown in FIG. 3 are executed as interrupt process at predetermined intervals during engine operation.

When urea aqueous solution recovery and addition control shown in FIG. 3 is started, it is initially determined in step S30 whether the engine operating state is a state where the temperature of exhaust gas is higher than or equal to the reference temperature. Here, the temperature of exhaust gas is high when the internal combustion engine 1 is operating in a high load state (high-load operating state) or when temperature raising control for raising the temperature of exhaust gas, such as filter regeneration process, is being executed. Therefore, it is possible to estimate that the temperature of exhaust gas is higher than or equal to the reference temperature. That is, the engine operating state where the temperature of exhaust gas is higher than or equal to the reference temperature is a state where the internal combustion engine 1 is operated at a high load or a state where temperature raising control for raising the temperature of exhaust gas, such as filter regeneration process, is being executed. Thus, in step S30, when the internal combustion engine 1 is in a high-load operating state or when temperature raising control, such as filter regeneration process, is being executed, it is determined that the engine operating state is the state where the temperature of exhaust gas is higher than or equal to the reference temperature. Specifically, the control device 80 determines whether the internal combustion engine 1 is in a high-load operating state by acquiring the load of the internal combustion engine on the basis of the intake air flow rate GA detected. In addition, the control device 80 determines whether filter regeneration process is being executed on the basis of whether a fuel addition command is output to the fuel addition valve 5. The fuel addition command is output to the fuel addition valve 5 in order to execute filter regeneration process. Then, the control device 80 determines whether the engine operating state is the state where the temperature of exhaust gas is higher than or equal to the reference temperature on the basis of these determinations.

When affirmative determination is made in step S30 (YES in step S30), the process from step S12 is executed, and urea aqueous solution in the urea aqueous solution addition valve 230 is recovered. On the other hand, when negative determination is made in step S30 (NO in step S30), the process from step S18 is executed, and urea aqueous solution is added in order to purify and reduce NOx.

Next, the operation of the exhaust emission control system according to the present embodiment will be described. In the exhaust emission control system according to the present embodiment, urea aqueous solution recovery control is executed in an engine operating state where the temperature of exhaust gas is higher than or equal to the reference temperature. Thus, by executing recovery control in the engine operating state where the temperature of exhaust gas is higher than or equal to the reference temperature, recovery control is executed without directly detecting the temperature of exhaust gas when the temperature of exhaust gas is higher than or equal to the reference temperature.

According to the above-described present embodiment, similar operation and advantageous effect to (1) of the above-described embodiment and the operation and advantageous effect of the following (2) are obtained.
(2) In the exhaust emission control system according to the present embodiment, urea aqueous solution recovery control is executed in the engine operating state where the temperature of exhaust gas is higher than or equal to the reference temperature. The temperature of exhaust gas varies on the basis of the engine operating state. Therefore, a rise in the temperature of exhaust gas to the reference temperature or above may be determined not on the basis of the temperature of exhaust gas itself but on the basis of the engine operating state. Thus, by executing recovery control in the engine operating state where the temperature of exhaust gas is higher than or equal to the reference temperature, it is possible to execute recovery control without directly detecting the temperature of exhaust gas when the temperature of exhaust gas is higher than or equal to the reference temperature.

Note that the expression "when a temperature of exhaust gas is higher than or equal to a reference temperature" herein and the accompanying claims means a case that the temperature of exhaust gas is expected to be higher than or equal to the reference temperature or another case that the temperature of exhaust gas is higher than or equal to a reference temperature.

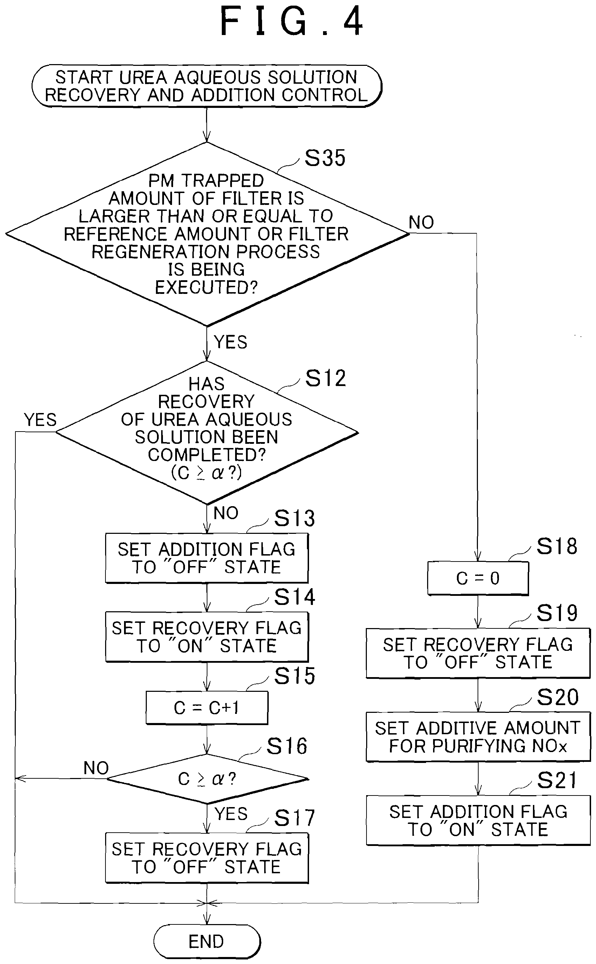

Next, one embodiment of the invention will be described with reference to FIG. 4. In the present embodiment, the difference from the above-described embodiment will be mainly described. The other components and operation are the same as those of the above-described embodiment unless otherwise specified. In addition, like reference numerals denote the same components as those of the above-described embodiment.

As described above, the process of regenerating the filter 32 is started when it is determined that the amount of PM trapped by the filter 32 exceeds a preset threshold. The filter 32 traps PM in the exhaust passage 26. Therefore, when the degree of deviation between the amount of PM trapped by the filter 32 and the threshold for starting regeneration process falls within a predetermined range, filter regeneration process is highly likely to be started within a predetermined period. Then, in the present embodiment, for example, when the estimated amount of PM trapped by the filter 32 is larger than or equal to a reference amount, urea aqueous solution recovery control is executed to recover urea aqueous solution from the urea aqueous solution addition valve 230. The reference amount is lower than the threshold for starting the process of regenerating the filter 32. The reference amount is, for example, set to an amount that is smaller than the trapped amount of PM, which is the threshold for starting the process of regenerating the filter 32, and an amount at which it is estimated that filter regeneration process starts within the predetermined period on the basis of the degree of deviation between the threshold and the reference amount. Furthermore, the predetermined period for setting the reference amount is, for example, set to a period during which the pump 220 is driven in order to recover the entire amount of urea aqueous solution in the urea aqueous solution addition valve 230.

In the present embodiment, the control device 80 executes urea aqueous solution recovery and addition control in accordance with the procedure of processes shown in the flowchart of FIG. 4. A series of processes shown in FIG. 4 are executed as interrupt process at predetermined intervals during engine operation.

When urea aqueous solution recovery and addition control shown in FIG. 4 is started, it is initially determined in step S35 whether the estimated PM trapped amount of the filter 32 is larger than or equal to the reference amount or whether the filter 32 is being regenerated. The control device 80 calculates the trapped amount of PM trapped by the filter 32 on the basis of the pressure difference ΔP. The pressure difference ΔP is detected by the differential pressure sensor 110. Then, when it is determined that the calculated trapped amount of PM is larger than or equal to the reference amount, affirmative determination is made in step S35 (YES in step S35). Then, the process proceeds to step S12. In addition, when the control device 80 is outputting the fuel addition command to the fuel addition valve 5 and it is determined that the filter 32 is being regenerated, the process proceeds to step S12. Thus, the process after step S12 is executed, and urea aqueous solution recovery control is executed to recover urea aqueous solution in the urea aqueous solution addition valve 230. Thus, in advance of execution of filter regeneration process, it is possible to recover urea aqueous solution in the urea aqueous solution addition valve 230. In addition, the predetermined period for setting the reference amount is set as described above, so it is possible to complete recovery of urea aqueous solution in the urea aqueous solution addition valve 230 before execution of filter regeneration process is started. During filter regeneration process, the state where the pump 220 is stopped and urea aqueous solution in the urea aqueous solution addition valve 230 has been recovered is kept.

On the other hand, when negative determination is made in step S35 (NO in step S35), the process after step S18 is executed, and urea aqueous solution is added in order to purify and reduce NOx. Next, the operation of the exhaust emission control system according to the present embodiment will be described.

In the exhaust emission control system according to the present embodiment, when the amount of PM trapped by the filter 32 is larger than or equal to the reference amount, urea aqueous solution recovery control is executed. The reference amount is smaller than the threshold for starting filter regeneration process. Thus, in advance of the situation that the temperature of exhaust gas is higher than or equal to the reference temperature through execution of filter regeneration process, urea aqueous solution recovery control is started. Then, the predetermined period is set in the above-described mode, so recovery of urea aqueous solution in the urea aqueous solution addition valve 230 is completed before the temperature of exhaust gas becomes higher than or equal to the reference temperature through execution of filter regeneration process.

According to the above-described embodiment, operation and advantageous effects similar to the above-described (1) and (2) and the operation and advantageous effect of the following (3) are obtained.
(3) In the exhaust emission control system according to the present embodiment, when the amount of PM trapped by the filter 32 is larger than or equal to the reference amount that is smaller than the threshold for starting filter regeneration process, urea aqueous solution recovery control is executed. Thus, in advance of the situation that the temperature of exhaust gas is higher than or equal to the reference temperature through execution of filter regeneration process, it is possible to start urea aqueous solution recovery control. Therefore, it is possible to suppress boiling of urea aqueous solution in the urea aqueous solution addition valve 230. Thus, it is possible to suppress metallic corrosion of the urea aqueous solution addition valve 230.

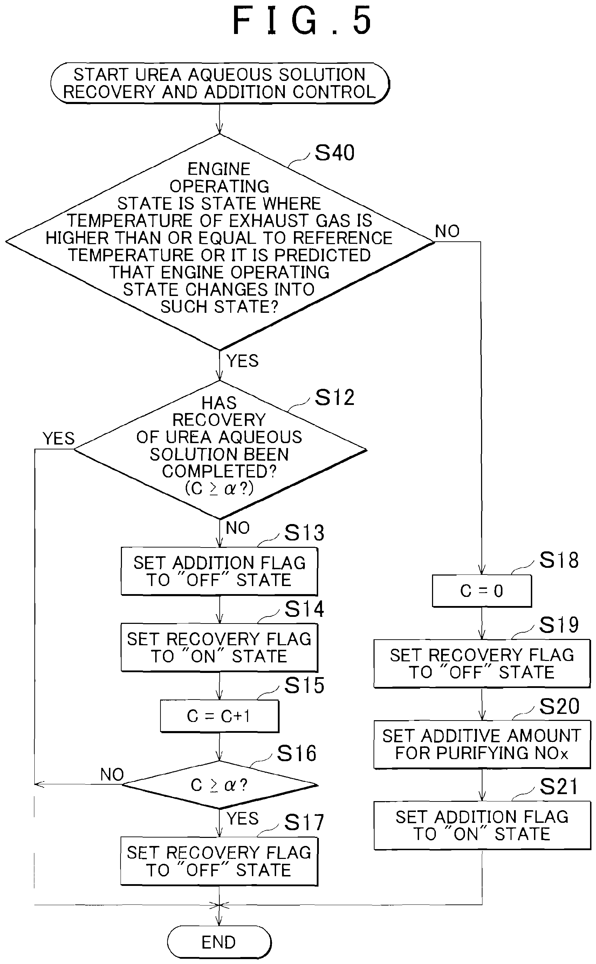

Next, one embodiment of the invention will be described with reference to FIG. 5. In the present embodiment, the difference from the above-described embodiment will be mainly described. The other components and operation are the same as those of the above-described embodiment unless otherwise specified. In addition, like reference numerals denote the same components as those of the above-described embodiment.

In the present embodiment, when it is predicted that the engine operating state changes into the state where the temperature of exhaust gas is higher than or equal to the reference temperature, urea aqueous solution recovery control is executed. In the present embodiment, the control device 80 executes urea aqueous solution recovery and addition control in accordance with the procedure of processes shown in the flowchart of FIG. 5. A series of processes shown in FIG. 5 are executed as interrupt process at predetermined intervals during engine operation.

When urea aqueous solution recovery and addition control shown in FIG. 5 is started, it is initially determined in step S40 whether the engine operating state is the state where the temperature of exhaust gas is higher than or equal to the reference temperature or whether it is predicted that the engine operating state changes into that state. Specifically, as described in the above embodiment, when the amount of PM trapped by the filter 32 becomes larger than or equal to the reference amount, filter regeneration process is executed within the predetermined period. Therefore, it is predicted that the engine operating state changes into the state where the temperature of exhaust gas is higher than or equal to the reference temperature. Then, the control device 80 calculates the trapped amount of PM trapped by the filter 32 on the basis of the pressure difference ΔP that is detected by the differential pressure sensor 110. Then, in step S40, when the calculated trapped amount of PM becomes larger than or equal to the reference amount, it is predicted that the engine operating state changes into the state where the temperature of exhaust gas is higher than or equal to the reference temperature, and affirmative determination is made (YES in step S40). In addition, for example, when the process of regenerating the filter 32 is being executed, it is determined that the engine operating state is the state where the temperature of exhaust gas is higher than or equal to the reference temperature, and affirmative determination is made (YES in step S40). Thus, the process after step S12 is executed, and urea aqueous solution in the urea aqueous solution addition valve 230 is recovered. Therefore, in advance of the situation that the temperature of exhaust gas is higher than or equal to the reference temperature, it is possible to start recovering urea aqueous solution in the urea aqueous solution addition valve 230. In addition, by setting the reference amount similarly to the above-described embodiment, it is possible to complete recovery of urea aqueous solution in the urea aqueous solution addition valve 230 before the temperature of exhaust gas becomes higher than or equal to the reference temperature. Then, when the temperature of exhaust gas is higher than or equal to the reference temperature, the state where the pump 220 is stopped and urea aqueous solution in the urea aqueous solution addition valve 230 has been recovered is kept.

On the other hand, when negative determination is made in step S40 (NO in step S40), the process after step S18 is executed, and urea aqueous solution is added in order to purify and reduce NOx. Next, the operation of the exhaust emission control system according to the present embodiment will be described.

In the exhaust emission control system according to the present embodiment, when it is predicted that the engine operating state changes into the state where the temperature of exhaust gas is higher than or equal to the reference temperature, urea aqueous solution recovery control is executed in advance of the change. Thus, urea aqueous solution recovery control is started in advance of the situation that the temperature of exhaust gas is higher than or equal to the reference temperature. Then, the predetermined period is set in the above-described mode, so recovery of urea aqueous solution in the urea aqueous solution addition valve 230 is completed before the temperature of exhaust gas becomes higher than or equal to the reference temperature.

According to the above-described embodiment, operation and advantageous effects similar to the above-described (1) and (2) and the operation and advantageous effect of the following (4) are obtained.
(4) In the exhaust emission control system according to the present embodiment, when it is predicted that the engine operating state changes into the state where the temperature of exhaust gas is higher than or equal to the reference temperature, urea aqueous solution recovery control is executed in advance of the change. Thus, it is possible to start urea aqueous solution recovery control in advance of the situation that the temperature of exhaust gas is higher than or equal to the reference temperature. Therefore, it is possible to suppress boiling of urea aqueous solution in the urea aqueous solution addition valve 230. Thus, it is possible to suppress metallic corrosion of the urea aqueous solution addition valve 230.

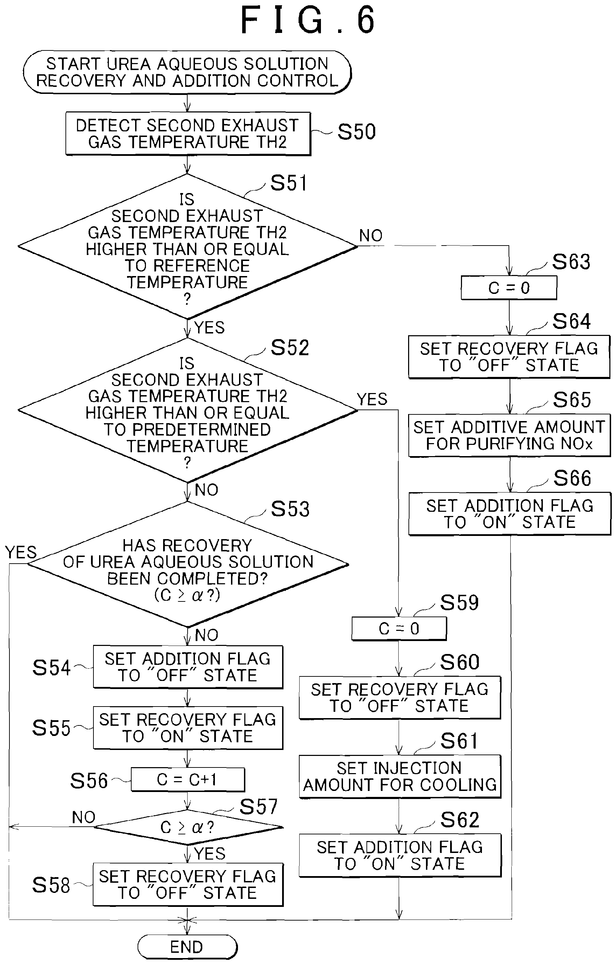

Next, one embodiment of the invention will be described with reference to FIG. 6. In the present embodiment, the difference from the above-described embodiment will be mainly described. The other components and operation are the same as those of the above-described embodiment unless otherwise specified. In addition, like reference numerals denote the same components as those of the above-described embodiment.

In the present embodiment, when the temperature of exhaust gas becomes higher than or equal to a predetermined temperature that is higher than the reference temperature during urea aqueous solution recovery control, recovery control is stopped, and urea aqueous solution is injected from the urea aqueous solution addition valve 230. Here, components, such as a coil, that constitute the urea aqueous solution addition valve 230 may undergo heat damage when the temperature of exhaust gas is higher than the predetermined temperature. The predetermined temperature is set to a temperature, at which it is estimated that heat damage to the components that constitute the urea aqueous solution addition valve 230 does not occur, when the temperature of exhaust gas is lower than or equal to the predetermined temperature. That is, in the present embodiment, when the temperature of exhaust gas has risen during recovery control, and the temperature of the components that constitute the urea aqueous solution addition valve 230 has reached a predetermined temperature lower than the temperature at which the components can undergo heat damage, urea aqueous solution is injected from the urea aqueous solution addition valve 230. Thus, by cooling the urea aqueous solution addition valve 230 in advance of reaching the temperature at which the components that constitute the urea aqueous solution addition valve 230 undergo heat damage, heat damage to the urea aqueous solution addition valve 230 is suppressed.

Hereinafter, urea aqueous solution recovery control in the present embodiment will be described with reference to FIG. 6. In the present embodiment, the control device 80 executes urea aqueous solution recovery and addition control in accordance with the procedure of processes shown in the flowchart of FIG. 6. A series of processes shown in FIG. 6 are executed as interrupt process at predetermined intervals during engine operation.

As shown in FIG. 6, when urea aqueous solution recovery and addition control is started, the second exhaust gas temperature TH2 is detected in step S50. The control device 80 detects the second exhaust gas temperature TH2 on the basis of a signal that is input from the second exhaust gas temperature sensor 120.

Subsequently, the process proceeds to step S51. In step S51, it is determined whether the second exhaust gas temperature TH2 is higher than or equal to the reference temperature. When it is determined in step S51 that the second exhaust gas temperature TH2 is higher than or equal to the reference temperature, urea aqueous solution in the urea aqueous solution addition valve 230 may boil. Therefore, the process proceeds to step S52.

In step S52, it is determined whether the second exhaust gas temperature TH2 is higher than or equal to the predetermined temperature that is higher than the reference temperature. When it is determined in step S52 that the second exhaust gas temperature TH2 is lower than the predetermined temperature (NO in step S52), it is estimated that the urea aqueous solution addition valve 230 does not undergo heat damage, so the process proceeds to step S53.

In step S53, it is determined whether recovery of urea aqueous solution has been completed. When it is determined in step S53 that recovery of urea aqueous solution has been completed, the control device 80 once ends the process.

On the other hand, when it is determined in step S53 that recovery of urea aqueous solution has not been completed (NO in step S53), the process proceeds to step S54, and the addition flag is set to the "OFF" state. When the addition flag has been already set to the "OFF" state, the addition flag is kept as it is. Thus, the control device 80 stops opening the urea aqueous solution addition valve 230, and stops adding urea aqueous solution into the exhaust passage 26.

Subsequently, the process proceeds to step S55, and the recovery flag is set to the "ON" state. When the recovery flag has been already set to the "ON" state, the recovery flag is kept as it is. Thus, the control device 80 recovers urea aqueous solution. Specifically, the control device 80 recovers urea aqueous solution from the urea aqueous solution addition valve 230 and the urea aqueous solution supply tube 240 and returns the urea solution to the tank 210 by rotating the pump 220 in the reverse direction. The recovery of urea aqueous solution is carried out continuously during a period in which the urea aqueous solution recovery flag is set to the "ON" state.

Subsequently, the process proceeds to step S56. In step S56, the count value is calculated. After that, in step S57, it is determined whether the count value C is larger than or equal to the counter determination value α. When negative determination is made in step S58 (NO in step S57), the control device 80 once ends the process. On the other hand, when it is determined in step S57 that the count value C is larger than or equal to the counter determination value α (YES in step S57), the process proceeds to step S58, the recovery flag is set to the "OFF" state, and the control device 80 once ends the process. That is, when the count value C is larger than or equal to the counter determination value α and it is estimated that urea aqueous solution in the urea aqueous solution addition valve 230 has been recovered, the control device 80 stops the pump 220 and stops recovering urea aqueous solution.

On the other hand, when it is determined in step S52 in the process shown in FIG. 6 that the second exhaust gas temperature TH2 is higher than or equal to the predetermined temperature (YES in step S52), the process proceeds to step S59. In step S59, the count value is set to "0". Then, the process proceeds to step S60. In step S60, the recovery flag is set to the "OFF" state. Thus, when urea aqueous solution is being recovered or recovery has been completed in the last process, the count value is reset to "0", and urea aqueous solution recovery control is stopped.

Subsequently, the process proceeds to step S61. In step S61, the injection amount of urea aqueous solution is set on the basis of the second exhaust gas temperature TH2 detected in step S50. The injection amount of urea aqueous solution is an injection amount per unit time, which is required in order to cool the urea aqueous solution addition valve 230. That is, the injection amount set here differs from the above-described additive amount of urea aqueous solution that is supplied in order to reduce and purify NOx. That is, the injection amount set here is set to an amount at which it is possible to suppress heat damage to the urea aqueous solution addition valve 230 by cooling the addition valve 230 through injection of urea aqueous solution in the injection amount at the detected second exhaust gas temperature TH2.

Subsequently, the process proceeds to step S62. In step S62, the addition flag is set to the "ON" state. Thus, the control device 80 controls the valve open state of the urea aqueous solution addition valve 230 such that urea aqueous solution in the amount set in step S62 is injected from the urea aqueous solution addition valve 230. After step S62, the control device 80 once ends the process.

In this way, when it is determined in step S52 that the second exhaust gas temperature TH2 is higher than or equal to the predetermined temperature, urea aqueous solution is injected from the urea aqueous solution addition valve 230 in order to cool the urea aqueous solution addition valve 230. In addition, when it is determined in step S52 that the second exhaust gas temperature TH2 is higher than or equal to the predetermined temperature, urea aqueous solution recovery control is stopped even during recovery control, and urea aqueous solution is injected. In addition, after the injection of urea aqueous solution is performed, when the second exhaust gas temperature TH2 is higher than or equal to the reference temperature and lower than the predetermined temperature again, urea aqueous solution recovery control is executed.

When it is determined in step S51 in the process shown in FIG. 6 that the second exhaust gas temperature TH2 is not higher than or equal to the reference temperature (NO in step S51), the process proceeds to step S63, and the count value C is reset to "0". Thus, the process proceeds to step S64. In step S64, the recovery flag is set to the "OFF" state. Subsequently, the process proceeds to step S65. In step S65, the additive amount of urea aqueous solution for purifying NOx is calculated. Then, in step S66, the addition flag is set to the "ON" state. In this way, when it is determined that the second exhaust gas temperature TH2 is not higher than or equal to the reference temperature, urea aqueous solution is added to purify and reduce NOx.

The operation of the present embodiment will be described below. In the exhaust emission control system according to the present embodiment, when the temperature of exhaust gas becomes higher than or equal to a predetermined temperature that is higher than the reference temperature during urea aqueous solution recovery control, recovery control is stopped, and urea aqueous solution is injected from the urea aqueous solution addition valve 230. Thus, relatively low-temperature urea aqueous solution is supplied from the tank 210 toward the urea aqueous solution addition valve 230. Therefore, the urea aqueous solution addition valve 230 is cooled.

According to the above-described present embodiment, similar operation and advantageous effect to (1) of the above-described embodiment and the operation and advantageous effect of the following (5) are obtained.
(5) In the exhaust emission control system according to the present embodiment, when the temperature of exhaust gas becomes higher than or equal to a predetermined temperature that is higher than the reference temperature during urea aqueous solution recovery control, recovery control is stopped, and urea aqueous solution is injected from the urea aqueous solution addition valve 230. Thus, when the temperature of exhaust gas becomes higher than the predetermined temperature that is higher than the reference temperature during recovery control and the urea aqueous solution addition valve 230 may undergo heat damage, urea aqueous solution is injected from the urea aqueous solution addition valve 230. Thus, relatively low-temperature urea aqueous solution is supplied from the tank 210 toward the urea aqueous solution addition valve 230. Therefore, the urea aqueous solution addition valve 230 is cooled. Thus, it is possible to suppress heat damage to the urea aqueous solution addition valve 230.

The invention is not limited to the modes illustrated in the above-described embodiments. The invention may be modified as follows.

In the above-described embodiments, when the second exhaust gas temperature TH2 is higher than or equal to the predetermined temperature, the injection amount of urea aqueous solution for cooling the urea aqueous solution addition valve is set on the basis of the second exhaust gas temperature TH2. However, the injection amount of urea aqueous solution may be a constant amount irrespective of the second exhaust gas temperature TH2. In addition, the injection amount of urea aqueous solution may be set to the same amount as the additive amount of urea aqueous solution for purifying NOx. In such a case, by injecting urea aqueous solution from the urea aqueous solution addition valve, it is possible to supply relatively low-temperature urea aqueous solution from the tank to the urea aqueous solution addition valve. Therefore, it is possible to suppress heat damage to the urea aqueous solution addition valve by cooling the urea aqueous solution addition valve.

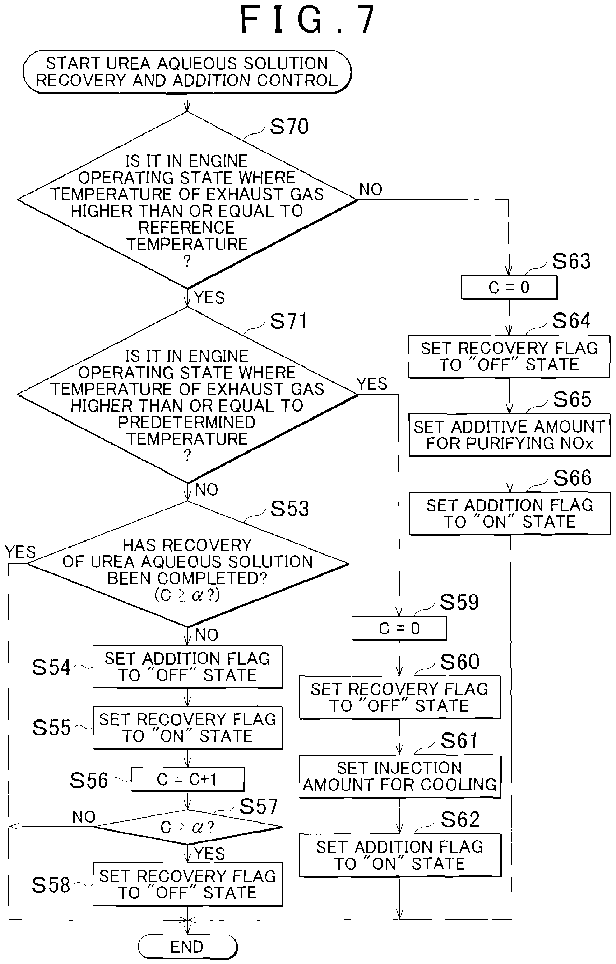

In the above-described embodiments, urea aqueous solution recovery control, urea aqueous solution injection control and urea aqueous solution addition control are switched on the basis of the second exhaust gas temperature TH2 detected. Urea aqueous solution injection control is control for cooling the urea aqueous solution addition valve. Urea aqueous solution addition control is control for adding urea aqueous solution to purify and reduce NOx. However, as shown in FIG. 7, these controls may be switched on the basis of the engine operating state.

That is, when high-load operation, filter regeneration process, or the like, is being executed, it may be estimated that the temperature of exhaust gas is higher than or equal to the reference temperature. Then, for example, when high-load operation or filter regeneration process is continued for a predetermined period, it may be estimated that the temperature of exhaust gas has further risen and is higher than or equal to the predetermined temperature as a result of continuing the engine operating state where the temperature of exhaust gas is raised. Thus, the above-described controls may be switched by estimating the temperature of exhaust gas on the basis of the engine operating state.

Specifically, as shown in FIG. 7, it is determined in step S70 whether the engine operating state is the state where the temperature of exhaust gas is higher than or equal to the reference temperature. When negative determination is made in step S70 (NO in step S70), urea aqueous solution is added for purifying and reducing NOx in the process from step S63. In addition, when affirmative determination is made in step S70 (YES in step S70), the process proceeds to step S71. In step S71, it is determined whether the engine operating state is the state where the temperature of exhaust gas is higher than or equal to the predetermined temperature that is higher than the reference temperature. Then, for example, when the engine operating state where the temperature of exhaust gas is higher than or equal to the reference temperature has not continued for the predetermined period yet, negative determination is made in step S71 (NO in step S71). Then, urea aqueous solution recovery control is executed in the process from step S53. On the other hand, for example, when the engine operating state where the temperature of exhaust gas is higher than or equal to the reference temperature has continued for the predetermined period, affirmative determination is made in step S71 (YES in step S71). Then, urea aqueous solution injection control for cooling the urea aqueous solution addition valve 230 is executed in the process from step S59.

When such a control mode is employed as well, similar operation and advantageous effects to those of (1), (2), (5) described in the above embodiments.

In addition, instead of determination in step S70, as shown in FIG. 5, it may be determined whether the engine operating state is the state where the temperature of exhaust gas is higher than or equal to the reference temperature or whether it is predicted that the engine operating state changes into that state.

In the above-described embodiments, the engine operating state where the temperature of exhaust gas is higher than or equal to the reference temperature is established when temperature raising control, such as filter regeneration process, is being executed or when the high-load operation state is carried out. However, other than these, for example, when temperature raising control for removing a deposit that originates from urea deposited in the NOx purification catalyst is executed, it may be considered that the engine operating state where the temperature of exhaust gas is higher than or equal to the reference temperature is established, and urea aqueous solution recovery control may be executed when the temperature raising control is executed.

In the above-described embodiments, urea aqueous solution recovery control is started in advance of the situation that the temperature of exhaust gas is higher than or equal to the reference temperature, and recovery of urea aqueous solution is completed before the temperature of exhaust gas becomes higher than or equal to the reference temperature. However, it is also applicable that urea aqueous solution recovery control is started in advance of the situation that the temperature of exhaust gas is higher than or equal to the reference temperature and, after the temperature of exhaust gas becomes higher than or equal to the reference temperature, recovery of urea aqueous solution is completed.

In the above-described embodiments, when the trapped amount of PM trapped by the filter is larger than or equal to the reference amount, it is predicted that the temperature of exhaust gas becomes higher than or equal to the reference temperature. However, for example, when temperature raising control for removing a deposit is executed at the time when it is determined that the deposition amount of the deposit in the NOx purification catalyst exceeds the threshold, urea aqueous solution recovery control may be executed as it is predicted that the temperature of exhaust gas becomes higher than or equal to the reference temperature when the deposition amount of the deposit is larger than or equal to a predetermined amount smaller than the threshold as well. In addition, it is predicted that the high-load operation state is carried out, for example, when the accelerator operation amount ACCP steeply increases. Therefore, urea aqueous solution recovery control may be executed by predicting that the temperature of exhaust gas becomes higher than or equal to the reference temperature.

In the above-described embodiments, when the temperature of exhaust gas is higher than or equal to the reference temperature, urea aqueous solution in the amount corresponding to the amount of urea aqueous solution in the urea aqueous solution addition valve is recovered. However, the recovery amount of urea aqueous solution is not limited to the above-described embodiment. That is, for example, even when the temperature of exhaust gas is higher than or equal to the reference temperature but is not so high, it may be possible to suppress boiling of urea aqueous solution in the urea aqueous solution addition valve by recovering urea aqueous solution from only the distal end portion of the urea aqueous solution addition valve. In addition, when the temperature of exhaust gas is higher than or equal to the reference temperature and as the temperature rises, urea aqueous solution may boil also in the urea aqueous solution supply tube and the supply tube may undergo metallic corrosion. Therefore, it may be desirable to also recover part of urea aqueous solution in the urea aqueous solution supply tube. Thus, for example, when the temperature of exhaust gas is higher than or equal to the reference temperature and as the temperature rises, the recovery amount of urea aqueous solution may be increased. It is possible to adjust the recovery amount of urea aqueous solution by appropriately adjusting a period during which the pump is driven or the rotation speed of the pump. Furthermore, when the temperature of exhaust gas is higher than or equal to the reference temperature without setting the recovery amount of urea aqueous solution, recovery of urea aqueous solution in the urea aqueous solution supply tube may be continued. That is, in this case, when the state where the temperature of exhaust gas is higher than or equal to the reference temperature continues for a long period, the entire amount of urea aqueous solution in the urea aqueous solution addition valve and the urea aqueous solution supply tube is recovered. In the above-described embodiments, whether the second exhaust gas temperature TH2 is higher than or equal to the reference temperature is determined by the control device on the basis of the detection signal of the second exhaust gas temperature sensor. Instead, whether the second exhaust gas temperature TH2 is higher than or equal to the reference temperature may be determined on the basis of, for example, the calculated temperature of exhaust gas that is estimated each time on the basis of the engine operating state.

In the above-described embodiments, when urea aqueous solution is recovered from the urea aqueous solution supply tube, the pump is rotated in the reverse direction. However, recovery may be carried out in a mode other than this mode. For example, urea aqueous solution may be recovered by providing a selector valve, or the like, which changes the flow direction of urea aqueous solution in the middle of the urea aqueous solution supply tube.

In the above-described embodiments, urea aqueous solution is used as the reducing agent. Instead, another reducing agent may be used.

While the disclosure has been explained in conjunction with specific exemplary embodiments thereof, it is evident that many alternatives, modifications, and variations will be apparent to those skilled in the art. Accordingly, exemplary embodiments of the disclosure as set forth herein are intended to be illustrative, not limiting. There are changes that may be made without departing from the scope of the disclosure.

## Claims

1. An exhaust emission control system for an internal combustion engine (1), which includes an addition valve (230) that supplies reducing agent to an exhaust passage (26) and a supply tube (240) that supplies the reducing agent to the addition valve (230), wherein:
when a temperature of exhaust gas flowing through the exhaust passage (26) is higher than or equal to a reference temperature, recovery control for recovering the reducing agent in the supply tube (240) is executed, and
when the temperature of exhaust gas is higher than or equal to a predetermined temperature that is higher than the reference temperature while the recovery control is being executed, the recovery control is stopped, and the reducing agent is injected from the addition valve (230),
**characterized in that**:
the reducing agent is injected from the addition valve (230) by an amount at which it is possible to suppress heat damage to the addition valve (230) by cooling the addition valve (230) with the reducing agent.

2. The exhaust emission control system according to claim 1, wherein
the recovery control is executed when the temperature of exhaust gas, which is acquired through any one of actual measurement and estimation, is higher than or equal to the reference temperature.

3. The exhaust emission control system according to claim 1 or 2, wherein
the recovery control is executed in an engine operating state where the temperature of exhaust gas is higher than or equal to the reference temperature.

4. The exhaust emission control system according to any one of claims 1 to 3, wherein
a filter (32) that traps particulate matter in exhaust gas is provided in the exhaust passage (26), regeneration process for regenerating the filter (32) is executed by raising the temperature of exhaust gas when an amount of the particulate matter trapped by the filter (32) becomes larger than or equal to a threshold, and the recovery control is executed when the amount of the particulate matter trapped by the filter (32) is larger than or equal to a reference amount that is smaller than the threshold.

5. The exhaust emission control system according to any one of claims 1 to 3, wherein
the recovery control is executed when it is predicted that an engine operating state changes into a state where the temperature of exhaust gas is higher than or equal to the reference temperature.

6. The exhaust emission control system according to claim 3 or 5, wherein
the engine operating state where the temperature of exhaust gas is higher than or equal to the reference temperature is established when temperature raising control for raising the temperature of exhaust gas is executed.

7. The exhaust emission control system according to claim 3 or 5, wherein
the engine operating state where the temperature of exhaust gas is higher than or equal to the reference temperature is established when the internal combustion engine (1) is operating at high load.

8. The exhaust emission control system according to any one of claims 1 to 7, wherein
it is predicted that the engine operating state changes into the state where the temperature of exhaust gas flowing through the exhaust passage (26) is higher than or equal to a reference temperature, when a pressure difference in exhaust gas pressure that is detected by a difference pressure sensor (110) becomes larger than or equal to a reference amount.

9. A control method for an exhaust emission control system for an internal combustion engine (1), the exhaust emission control system including an addition valve (230) that supplies reducing agent to an exhaust passage (26) and a supply tube (240) that supplies the reducing agent to the addition valve (230), comprising the steps of:
when a temperature of exhaust gas flowing through the exhaust passage (26) is higher than or equal to a reference temperature, executing recovery control for recovering the reducing agent in the supply tube (240), and
when the temperature of exhaust gas is higher than or equal to a predetermined temperature that is higher than the reference temperature while the recovery control is being executed, stopping the recovery control, and injecting the reducing agent from the addition valve (230),
**characterized by** comprising the step of:
injecting the reducing agent from the addition valve (230) by an amount at which it is possible to suppress heat damage to the addition valve (230) by cooling the addition valve (230) with the reducing agent.

## Patentansprüche

1. Abgasemissions-Steuerungssystem für eine Brennkraftmaschine (1), das ein Zugabeventil (230), das einer Abgasleitung (26) ein Reduktionsmittel zuführt, und ein Zuführrohr (240) beinhaltet, das dem Zugabeventil (230) das Reduktionsmittel zuführt, wobei:
wenn eine Temperatur des Abgases, das durch die Abgasleitung (26) strömt, höher als oder genauso hoch ist wie eine Referenztemperatur, eine Rückgewinnungssteuerung zur Rückgewinnung des Reduktionsmittels in dem Zuführrohr (240) ausgeführt wird, und
wenn die Temperatur des Abgases höher als oder genauso hoch ist wie eine vorbestimmte Temperatur, die höher ist als die Referenztemperatur, während die Rückgewinnungssteuerung ausgeführt wird, die Rückgewinnungssteuerung gestoppt wird, und das Reduktionsmittel aus dem Zugabeventil (230) eingespritzt wird,
**dadurch gekennzeichnet, dass**:
das Reduktionsmittel aus dem Zugabeventil (230) in einer Menge eingespritzt wird, bei der es möglich ist, einen Wärmeschaden an dem Zugabeventil (230) zu verhindern, indem das Zugabeventil (230) mit dem Reduktionsmittel gekühlt wird.

2. Abgasemissions-Steuerungssystem nach Anspruch 1, wobei
die Rückgewinnungssteuerung ausgeführt wird, wenn die Temperatur des Abgases, die durch jede von einer Ist-Messung und einer Ist-Schätzung erfasst wird, höher als oder genauso hoch ist wie die Referenztemperatur.

3. Abgasemissions-Steuerungssystem nach Anspruch 1 oder 2, wobei
die Rückgewinnungssteuerung in einem Maschinenbetriebszustand ausgeführt wird, in dem die Temperatur des Abgases höher als oder genauso hoch ist wie die Referenztemperatur.

4. Abgasemissions-Steuerungssystem nach einem der Ansprüche 1 bis 3, wobei
ein Filter (32), der Partikel in einem Abgas abscheidet, in der Abgasleitung (26) angeordnet ist, wobei ein Regenerationsvorgang zum Regenerieren des Filters (32) durch Erhöhen der Temperatur des Abgases ausgeführt wird, wenn eine Menge der durch den Filter (32) abgeschiedenen Partikel größer als oder gleich einem Schwellenwert wird, und die Rückgewinnungssteuerung ausgeführt wird, wenn die Menge der durch den Filter (32) abgeschiedenen Partikel größer als oder gleich einer Referenzmenge ist, die kleiner als der Schwellenwert ist.

5. Abgasemissions-Steuerungssystem nach einem der Ansprüche 1 bis 3, wobei
die Rückgewinnungssteuerung ausgeführt wird, wenn prognostiziert wird, dass ein Maschinenbetriebszustand in einen Zustand wechselt, wo die Temperatur des Abgases höher als oder gleich der Referenztemperatur ist.

6. Abgasemissions-Steuerungssystem nach Anspruch 3 bis 5, wobei
der Maschinenbetriebszustand, in dem die Temperatur des Abgases höher als oder gleich der Referenztemperatur ist, eingerichtet wird, wenn eine Temperaturerhöhungssteuerung zum Erhöhen der Temperatur des Abgases ausgeführt wird.

7. Abgasemissions-Steuerungssystem nach Anspruch 3 bis 5, wobei
der Maschinenbetriebszustand, in dem die Temperatur des Abgases höher als oder gleich der Referenztemperatur ist, eingerichtet wird, wenn die Brennkraftmaschine (1) bei hoher Last betrieben wird.

8. Abgasemissions-Steuerungssystem nach einem der Ansprüche 1 bis 7, wobei
prognostiziert wird, dass der Maschinenbetriebszustand in den Zustand wechselt, in dem die Temperatur des Abgases, das durch die Abgasleitung (26) strömt, höher als oder gleich einer Referenztemperatur ist, wenn eine Druckdifferenz eines Abgasdrucks, die durch einen Differenzdrucksensor (110) erfasst wird, größer als oder gleich einer Referenzmenge wird.

9. Steuerungsverfahren für ein Abgasemissions-Steuerungssystem für eine Brennkraftmaschine (1), wobei das Abgasemissions-Steuerungssystem ein Zugabeventil (230), das einer Abgasleitung (26) ein Reduktionsmittel zuführt, und ein Zuführrohr (240) beinhaltet, das dem Zugabeventil (230) das Reduktionsmittel zuführt, wobei das Verfahren folgende Schritte aufweist:
wenn eine Temperatur des Abgases, das durch die Abgasleitung (26) strömt, höher als oder gleich einer Referenztemperatur ist, Ausführen einer Rückgewinnungssteuerung zum Rückgewinnen des Reduktionsmittels in dem Zuführrohr (240), und,
wenn die Temperatur des Abgases höher als oder gleich einer vorbestimmten Temperatur ist, die höher als die Referenztemperatur ist, während die Rückgewinnungssteuerung ausgeführt wird, Stoppen der Rückgewinnungssteuerung und Einspritzen des Reduktionsmittels aus dem Zugabeventil (230),
**dadurch gekennzeichnet, dass** das Verfahren folgende Schritte aufweist:
Einspritzen des Reduktionsmittels aus dem Zugabeventil (230) in einer Menge, bei der es möglich ist, eine Wärmebeschädigung an dem Zugabeventil (230) zu verhindern, indem das Zugabeventil (230) mit dem Reduktionsmittel gekühlt wird.

## Revendications

1. Système de commande d'émission d'échappement pour un moteur à combustion interne (1), qui inclut une soupape d'addition (230) qui alimente de l'agent réducteur vers un passage d'échappement (26) et un tube d'alimentation (240) qui alimente l'agent réducteur vers la soupape d'addition (230), dans lequel :
quand une température du gaz d'échappement s'écoulant à travers le passage d'échappement (26) est supérieure ou égale à une température de référence, la commande de récupération pour récupérer l'agent réducteur dans le tube d'alimentation (240) est exécutée, et
quand la température du gaz d'échappement est supérieure ou égale à une température prédéterminée qui est supérieure à la température de référence quand la commande de récupération est exécutée, la commande de récupération est stoppée, et l'agent réducteur est injecté depuis la soupape d'addition (230),
**caractérisé en ce que** :
l'agent réducteur est injecté depuis la soupape d'addition (230) dans une quantité à laquelle il est possible de supprimer l'endommagement par la chaleur de la soupape d'addition (230) en refroidissant la soupape d'addition (230) avec l'agent réducteur.

2. Système de commande d'émission d'échappement selon la revendication 1, dans lequel
la commande de récupération est exécutée quand la température du gaz d'échappement, qui est acquise par l'une quelconque d'une mesure réelle et d'une estimation, est supérieure ou égale à la température de référence.

3. Système de commande d'émission d'échappement selon la revendication 1 ou 2, dans lequel
la commande de récupération est exécutée dans un état de fonctionnement du moteur où la température du gaz d'échappement est supérieure ou égale à la température de référence.

4. Système de commande d'émission d'échappement selon l'une quelconque des revendications 1 à 3, dans lequel
un filtre (32) qui piège la matière particulaire dans le gaz d'échappement est placé dans le passage d'échappement (26), un processus de régénération pour régénérer le filtre (32) est exécuté en élevant la température du gaz d'échappement quand une quantité de la matière particulaire piégée par le filtre (32) devient supérieure ou égale à un seuil, et la commande de récupération est exécutée quand la quantité de la matière particulaire piégée par le filtre (32) est supérieure ou égale à une quantité de référence qui est inférieure au seuil.

5. Système de commande d'émission d'échappement selon l'une quelconque des revendications 1 à 3, dans lequel
la commande de récupération est exécutée quand il est prévu qu'un état de fonctionnement du moteur change dans un état où la température du gaz d'échappement est supérieure ou égale à la température de référence.

6. Système de commande d'émission d'échappement selon la revendication 3 ou 5, dans lequel
l'état de fonctionnement du moteur où la température du gaz d'échappement est supérieure ou égale à la température de référence est établi quand la commande d'élévation de température pour élever la température du gaz d'échappement est exécutée.

7. Système de commande d'émission d'échappement selon la revendication 3 ou 5, dans lequel
l'état de fonctionnement du moteur où la température du gaz d'échappement est supérieure ou égale à la température de référence est établi quand le moteur à combustion interne (1) fonctionne à charge élevée.

8. Système de commande d'émission d'échappement selon l'une quelconque des revendications 1 à 7, dans lequel
il est prévu que l'état de fonctionnement du moteur change pour l'état où la température du gaz d'échappement s'écoulant à travers le passage d'échappement (26) est supérieure ou égale à une température de référence, quand une différence de pression dans la pression du gaz d'échappement qui est détectée par un capteur de pression différentielle (110) devient supérieure ou égale à une quantité de référence.

9. Procédé de commande pour un système de commande d'émission d'échappement pour un moteur à combustion interne (1), le système de commande d'émission d'échappement incluant une soupape d'addition (230) qui alimente de l'agent réducteur vers un passage d'échappement (26) et un tube d'alimentation (240) qui alimente l'agent réducteur vers la soupape d'addition (230), comprenant les étapes :
quand une température du gaz d'échappement s'écoulant à travers le passage d'échappement (26) est supérieure ou égale à une température de référence, d'exécution de la commande de récupération pour récupérer l'agent réducteur dans le tube d'alimentation (240), et
quand la température du gaz d'échappement est supérieure ou égale à une température prédéterminée qui est supérieure à la température de référence quand la commande de récupération est exécutée, d'arrêt de la commande de récupération, et d'injection de l'agent réducteur depuis la soupape d'addition (230),
**caractérisé en ce qu'**il comprend les étapes :
d'injection de l'agent réducteur depuis la soupape d'addition (230) dans une quantité à laquelle il est possible de supprimer l'endommagement par la chaleur de la soupape d'addition (230) en refroidissant la soupape d'addition (230) avec l'agent réducteur.
